# EUROPEAN PATENT APPLICATION

(11) **EP 0 823 212 A1**
(43) Date of publication of application: **11.02.1998**
(21) Application number: 97116923.0
(22) Date of filing: 16.02.1993
(51) Int. Cl.: A01N 25/10

(54) **Leaching inhibition of crop treating chemicals with polymers**

(30) Priority: 28.02.1992 US 843024; 28.02.1992 US 843025; 28.02.1992 US 843325; 27.07.1992 US 919317; 27.07.1992 US 920082
(62) Divisional of application: 93905976.2
(71) Applicant: ISP INVESTMENTS INC., Wilmington, Delaware 19801 (US)
(72) Inventor: Narayanan, Kolazi S., Palisades Park, NJ 07610 (US); Chaudhuri, Ratan K., Butler, NJ 07405 (US)
(74) Representative: Harrison, David Christopher

(57) **Abstract**

This invention relates to inhibiting leaching of crop treating chemicals into the ground water, aqua-system and surrounding soil of the treatment site by contacting the plant or plant site with an effective leach inhibiting, plant tolerating amount of a copolymer of a maleic acid or ester or a mixture thereof and a comonomer of an alkyl alpha alkenyl ether; optionally including a water based wetting agent of a higher alkyl substituted lactam, anionic surfactant and water to enhance the wetting properties of herbicide and pesticide formulations.

## Description

Agrichemical contamination is a growing concern since more than 12 different pesticides have been found in the ground water. Studies have shown that pesticide residues in ground water are increasing and are particularly severe where agronomic and horticultural crops are grown in permeable sandy soils or in locations which receive heavy rainfall. Among the chemicals which are particularly troublesome are herbicides such as bromacil, atrazine, metribuzin, dicamba and metolachlor, nematicides such as aldicarb, fungicides such as triforine, pencanazole and bendiocarb and insecticides such as diazinone, chloropyrophor, and ethion, which have been found in drinking water. Hence, there is an acute need to restrict the downward movement of pesticides, herbicides, fungicides and other organic pollutants in the soil without reducing their agricultural efficacy.
(a) There is provided a leach inhibiting, copolymer which is readily combined with an agrichemical or incorporated into an agrichemical formulation. The leach inhibiting copolymers of this invention are copolymers, preferably water insoluble copolymers having less than 10% water solubility, such as copolymers of maleic acid, a C₁ to C₆ mono- or di- ester of said acid or a mixture thereof and a C₂ to C₂₅ comonomer of an alkyl alpha alkenyl ether or an alpha olefin, which copolymer has a molecular weight (Mw) of between about 8,000 and about 3,000,000. The structure of said copolymer is defined by the formula 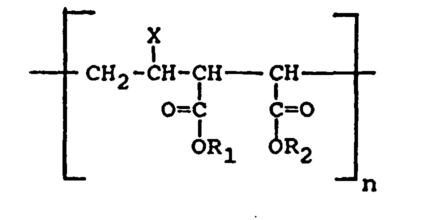
   wherein X is C₁ to C₂₅ alkyl, alkoxy, aryl, aryloxy;
   R₁ and R₂ are each independently hydrogen or C₁ to C₆ alkyl and n has a value of from 25 to 5000.

   Examples of suitable maleate esters include mono- and di- methyl, ethyl, propyl, isopropyl, butyl, t-butyl, hexyl, cyclohexyl and dimethylpropyl esters of maleic acid or mixtures thereof. The polymer may also contain mixtures of maleic acid and at least one of the ester derivatives as the monomeric portion of the polymer.
   Representative examples of the alkyl alpha-alkenyl ether comonomer include vinyl methyl ether, vinyl ethyl ether, vinyl propyl ether, vinyl isopropyl ether, vinyl pentyl ether, vinyl butyl ether, vinyl isobutyl ether, vinyl t-butyl ether, vinyl hexyl ether, vinyl methylbutyl ethers, 2-ethenyl butyl ether, 2-ethenyl propyl ether, 2-ethenyl ethyl ether, 2-ethenyl hexyl ether, 2-ethenyl dodecyl ether, 2-ethenyl benzyl ether, vinyl ethylbutyl ethers and mixtures thereof.
   Illustrative of the comonomeric alpha olefins are ethene, propene, 1-butene, 1-octene, 1-hexadecene, 1-eicosene, 1-pentacosene, etc. and mixtures of any of the above comonomers.
   The preferred polymers of this invention are the copolymers of maleic acid or the C₁ to C₄ half esters of maleic acid with a methyl, ethyl or butyl vinyl ether having a molecular weight of between about 10,000 and about 1,000,000.
   The above polymer/agrichemical is contacted with the plant or surrounding soil area in a pre-emergent or post-emergent application and in an effective leach inhibiting, plant tolerating amount. In combining with the active agrichemical, as little as 0.001 weight % of instant polymer, based on the total composition, is effective to inhibit leaching with various agrichemicals. However a weight ratio of agrichemical to polymer of between about 0.1:1 and about 10:1 is recommended and between about 0.3:1 and about 2:1 is preferred.
   Of the present polymeric leach inhibitors, those containing between about 10 and about 90 weight % of the alkyl alkenyl ether monomer are desirable and those containing containing not more than 80 weight % of the comonomer are recommended for most plant species.
   Generally the present polymer is applied as an aqueous solution containing from about 25 to about 65 wt. % copolymer; although alcoholic solutions in the same concentration may also be employed.
   Various surfactants, such as lignin sulfonate, naphthalene/formaldehyde condensate sulfonate, alkoxylated phenols, and the like can also be added in amounts up to about 5 wt. % of the total composition to increase agrichemical solubility. Other adjuvants such as emulsifiers, suspension aids and preservatives, can also be included in the formulation if desired. The leach inhibiting formulation can also be applied as a powder for crop dusting; in which case the formulation is dried to a particulate solid before use.
   A further advantage of the present polymers is that they are non-toxic and are environmentally safe; thus they do not add to soil contamination. Additionally the present polymers may increase the organic content of the soil, thus benefiting future crops. These and many other benefits will be realized by the use of the present polymeric compounds.
   Various tests were conducted to show the efficacy and safety of the polymers in (a).
(b) As another feature of the invention, the leach inhibiting is accomplished with a nitrogen-containing carbohydrate polymer having pendant secondary, tertiary or quaternized amino groups which is readily formulated or incorporated with a plant treating agent to hinder or prevent migration of the plant treating agent into the ground water, aqua-system or soil areas vicinal to the treating site.
   These polymers are preferably derivatives of naturally occurring plant and animal polycarbohydrates and proteins, such as a hydrolyzed animal protein, e.g. keratin, a linear polycarbohydrate such as a polysacharide, e.g. starch, cellulose, guar gum or partially hydrolyzed polycarbohydrates of the above. Other suitable polymers include the alkoxylated derivatives of vinyl alcohol polymer or vinyl alcohol/vinyl acetate copolymer. The present leach inhibiting polymers of this invention are derivatized by the following general equation. 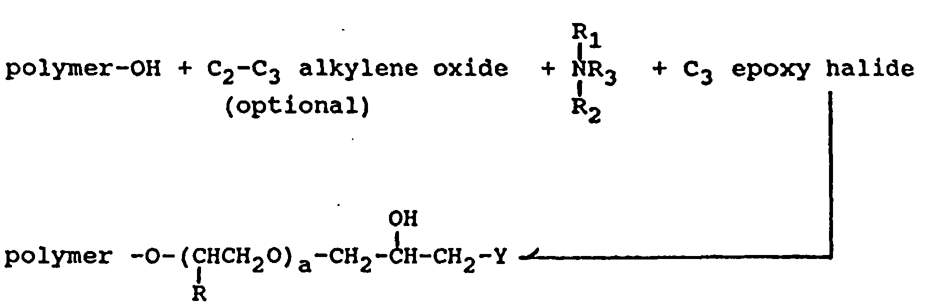
   wherein Y is 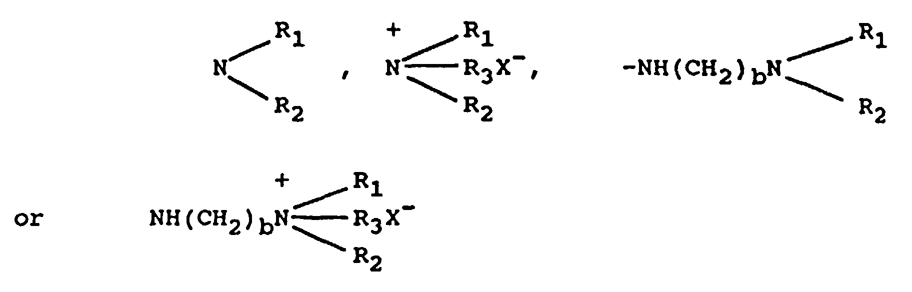
   R is hydrogen or methyl
   R₁, R₂ and R₃ are each selected from the group of hydrogen and C₁ to C₂₀ alkyl, with the proviso that, in the above formula, at least one of R₁ and R₂ or at least one of R₁, R₂ and R₃ is other than hydrogen;
   X⁻ is an anion; a has a value of from 0 to 20 and b has a value of from 2 to 18.

   The carbohydrate polymers of this invention include steardimonium hydroxyethyl cellulose; laurdimonium hydroxyethyl cellulose; cocadimonium hydroxyethyl cellulose; guar hydroxypropyl triammonium chloride; a polymeric quaternary ammonium salt of hydroxyethyl cellulose with a trimethyl ammonium hydroxypropylated epoxide or quaternized alkyl polyvinyl alcohol/acetate copolymer; guar gum polymerized 2-hydroxy-3-(trimethyl ammonium) propyl ether chloride and the like.
   Polymers having a number average molecular weight of between about 50,000 and about 1,000,000, preferably between about 60,000 and about 150,000, are suitable. Those polymers having a polydispersity of from about 2 to about 8, most desirably between about 3 and 4, are considered the best for providing uniform formulations of high efficiency.
   Various tests were carried out to show the effectiveness of the polymers in (b).
(c) In accordance with another feature of this invention, there is provided a leach inhibiting copolymer having pendant nitrogeneous groups which is readily formulated with or incorporated into a plant treating agent; which copolymer having pendant nitrogeneous groups contains between about 40 and about 98 wt. % of monomer unit A defined by the formula 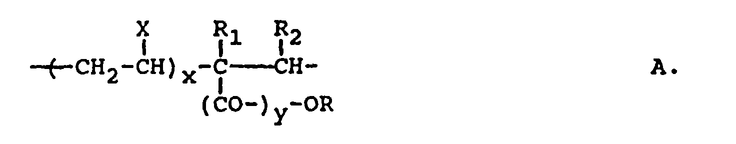 and mixtures of comonomer A and 2 to 40 wt. % of comonomer unit B 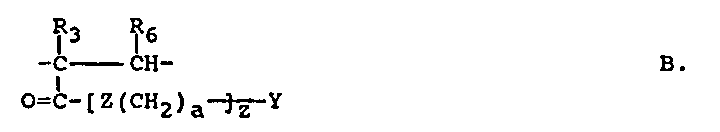
   wherein X is hydrogen, a C₁ to C₂₂ radical of the group alkyl, alkoxy, aryl, alkaryl, aryloxy and alkaryloxy;
   R₂ is hydrogen or -(CO)_{y'}OR';
   R, R₁, R₃ and R' are each selected from the group of hydrogen and lower alkyl;
   R₆ is hydrogen or 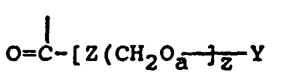
   x, y, y' and z each have a value of 0 or 1;
   a has a value of from 2 to 4;
   Z is -O- or -NH-
   Y is an optionally quaternized group of 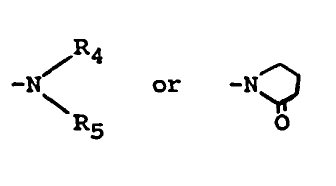 and
   R₄ and R₅ are hydrogen or lower alkyl except that at least one of R₄ and R₅ is lower alkyl and mixtures of comonomer B.

   The present copolymers possess superior leach inhibiting properties which is in part due to the quaternized, tertiary or secondary amino groups depending from the linear polymer chain. These pendant groups provide positively charged sites which can act as an anchoring groups for the negatively charged silicate soil surface.
   Examples of suitable alpha olefin units (A) include organo methyl vinyl ether, organo acrylate or methacrylate; organo vinyl alcohol; organo maleic acid; organo butyl maleate; maleic acid ethyl ester; acrylic or methacrylic acid; methyl, methacrylate or acrylate; maleic acid wherein said organo group is preferably C₂ to C₁₈ alkyl; phenyl optionally substituted with lower alkyl, lower alkoxy or alkenyl; benzyl; phenyloxy optionally substituted with lower alkyl and the like. Illustrative of comonomer B units are 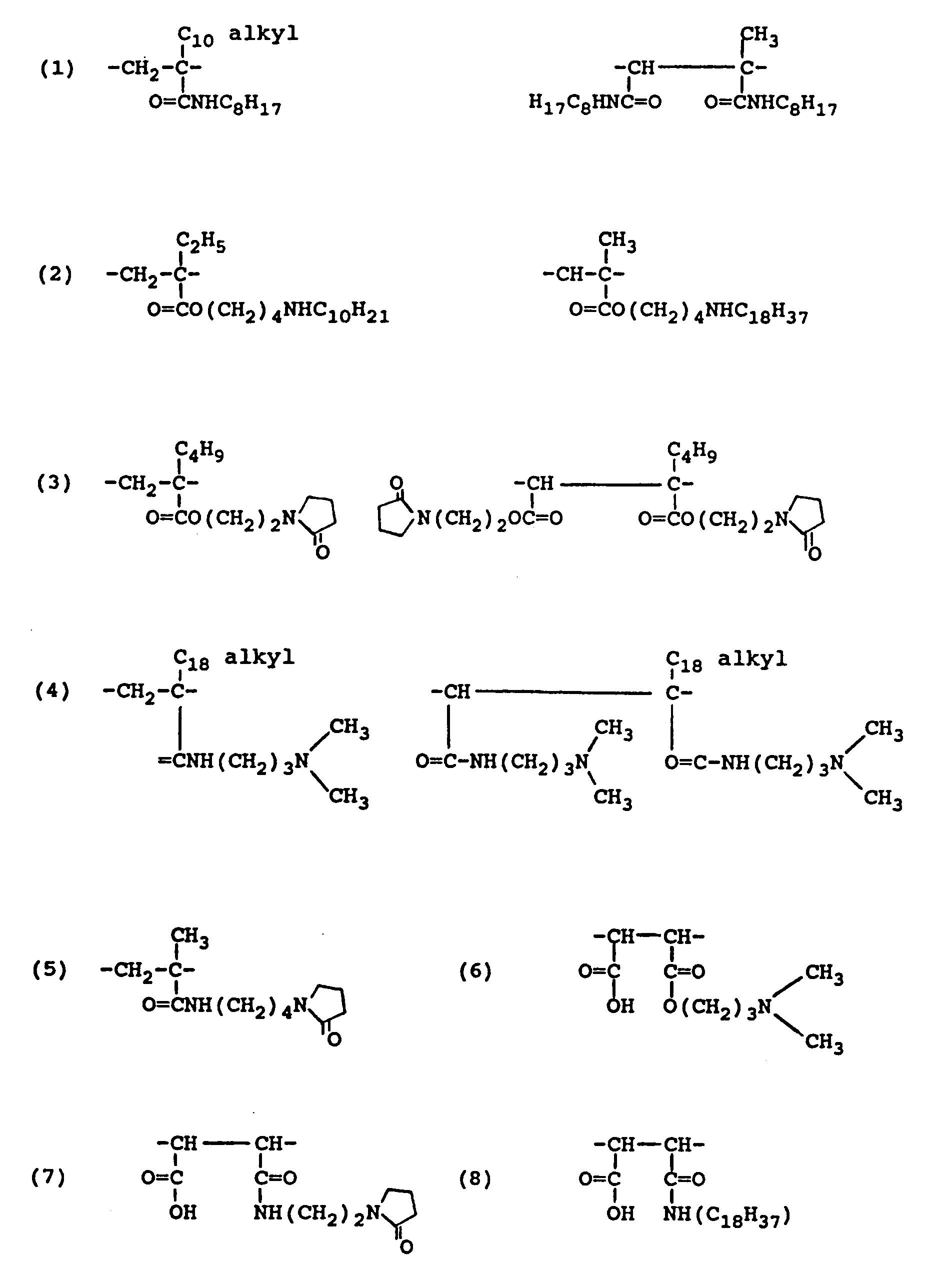 The copolymers of this invention are those having a number average molecular weight greater than 20,000, preferably between about 50,000 and about 150,000. The polymers also having a polydispersity* of from about 4 to about 8, most desirably about 6, are considered the best for providing uniform formulations of high efficiency.
   The preferred copolymers of this invention are those shown in following Table A. 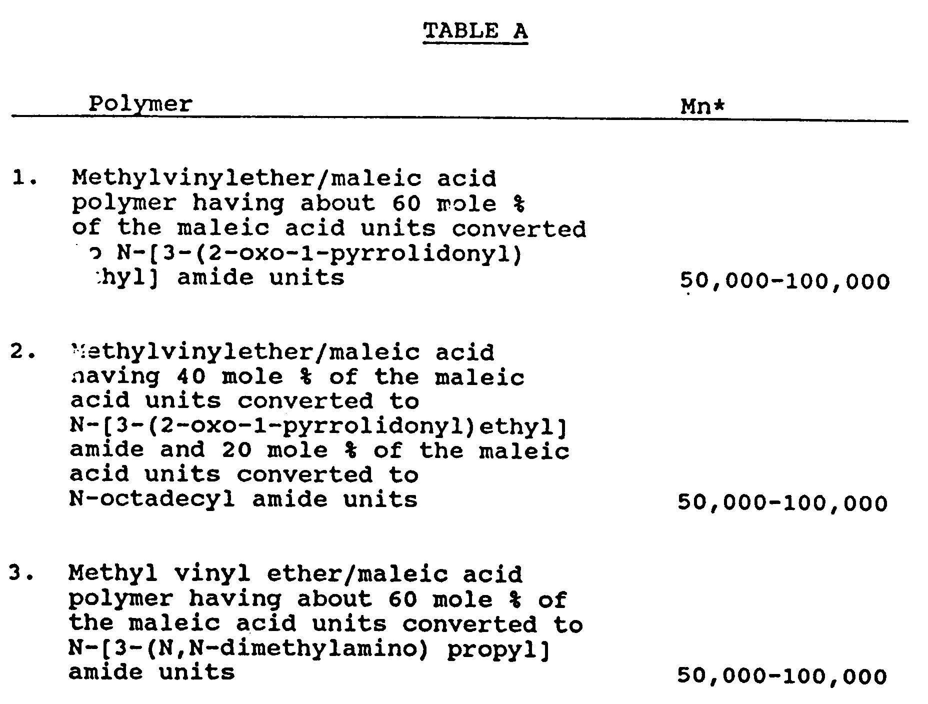 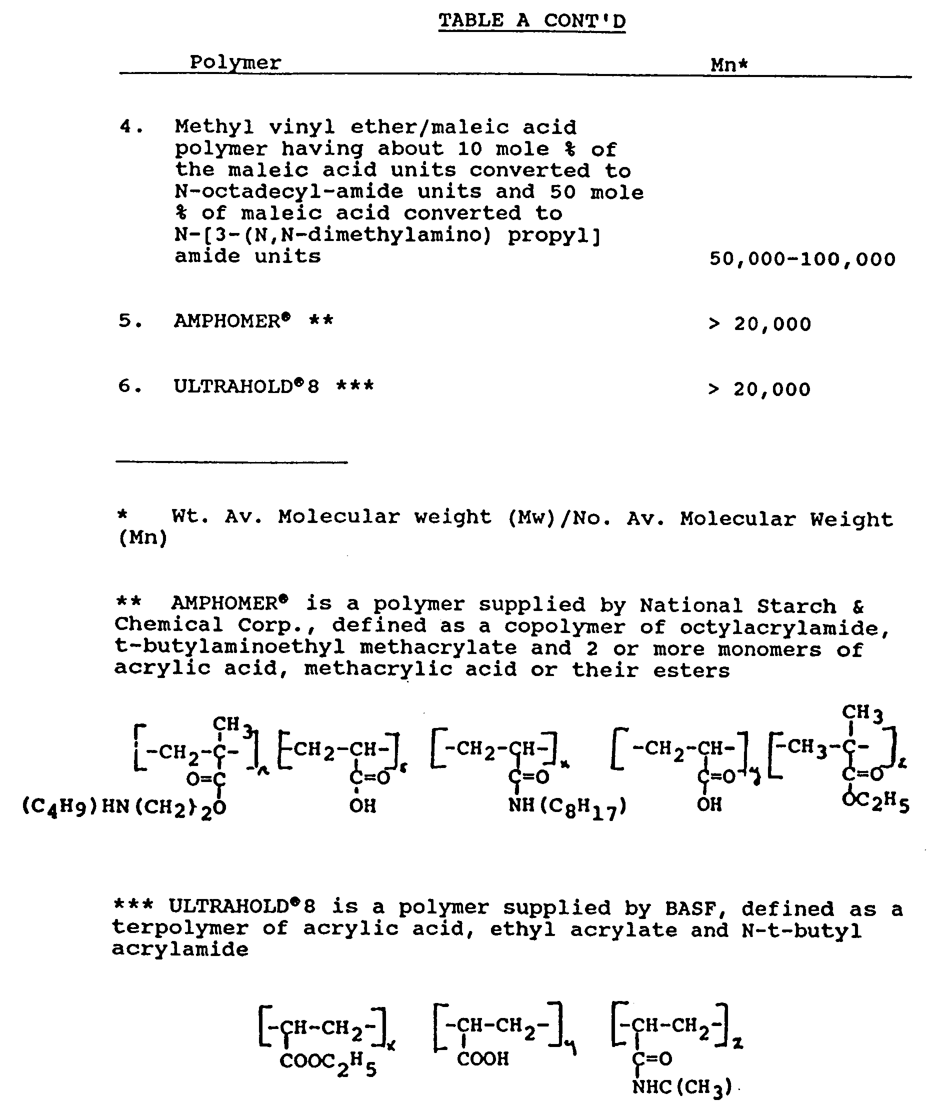
(d) In still another embodiment of this invention, there is provided a leach inhibiting, lactam-containing polymer which is readily formulated with or incorporated into a plant treating agent which polymer is selected from the group of a crosslinked or non-crosslinked N-alkenyl lactam homopolymer or copolymer with a C₂ to C₂₀ comonomer selected from the group of an alkenoic acid; an alkenyl- anhydride, ester, ether, amino ester, amino amide; and an alpha mono- or di- olefin and terpolymeric mixtures of the above monomers.

* Wt. Av. Molecular weight (Mw)/No. Av. Molecular Weight (Mn)

The lactam moiety of the polymer is represented by the formula 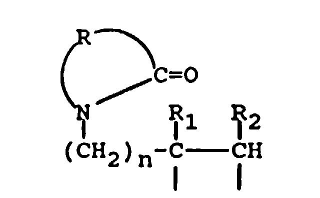
wherein R is C₃ to C₆ alkylene optionally substituted with C₁ to C₂₀ alkyl; R₁ and R₂ are each independently C₂ to C₂₀ alkyl or hydrogen and n has a value of from 0 or 2.

Examples of suitable lactam units include monocyclic lactams such as N-vinyl- and N-ethenylpyrrolidones, caprolactam; azacyclooctanones, as well as mono-, di- or tri- methyl, ethyl, octyl, hexadecyl, eicosyl, etc. ring substituted derivatives thereof. The N-alkenyl lactam polymers of this invention are those having a number average molecular weight of between about 5,000 and about 500,000, preferably between about 6,000 and about 150,000. The polymers also having a polydispersity* of from about 1 to about 8, most desirably about 2-6, are considered the best for providing uniform formulations of high efficiency.
* Wt. Av. Molecular weight (Mw)/No. Av. Molecular Weight (Mn)

Of the present leach inhibitors, those containing between about 0 and about 90 weight % of the non-lactam comonomer are useful; however, those containing not more than 85 weight % of a comonomer are recommended for most plant species. Of the lactam species, substituted or unsubstituted N-vinyl pyrrolidonyl-containing polymers are preferred. Examples of the present leach controlling agents include C₂₀ alkylated N-vinyl pyrrolidone polymers; crosslinked N-vinyl pyrrolidone homopolymers, N-alkenyl pyrrolidone polymers with an alpha-olefin, such as propene or 1-butene; polyvinylpyrrolidinone/acrylic or methacrylic acid copolymer;
N-alkenyl pyrrolidone/propenoic acid copolymer;
N-alkenyl pyrrolidone/vinyl acetate copolymer;
N-alkenyl pyrrolidone/acrylic or methacrylic acid copolymer;
N-alkenyl pyrrolidone/methyl vinyl ether copolymer;
N-alkenyl pyrrolidone/butadiene copolymer;
N-alkenyl pyrrolidone/vinyl butyrate copolymer;
N-alkenyl pyrrolidone/maleic acid or anhydride copolymer;
N-alkenyl pyrrolidone/dimethylaminoethyl acrylamide copolymer;
quaternized N-alkenyl pyrrolidone/dimethylaminoethyl acrylamide copolymer;
N-alkenyl pyrrolidone/dimethylaminoethyl methacrylate copolymer;
quaternized N-alkenyl pyrrolidone/dimethylaminoethyl methacrylate copolymer;
N-vinyl pyrrolidone/N-vinyl caprolactam/dimethylaminoethyl methacrylate terpolymer;
N-alkenyl caprolactam/dimethylaminoethyl methacrylate copolymer;
quaternized N-alkenyl caprolactam/dimethylaminoethyl acrylate copolymer;
N-vinyl pyrrolidone/eicosene copolymer;
1-ethenyl-2-pyrrolidinone/acetic acid ethenyl ester copolymer;
N-alkenyl pyrrolidone/acrylic acid copolymer;
water-insoluble crosslinked polyvinylpyrrolidone or polyethenylpyrrolidone copolymers, and the like.

Particularly preferred are the vinyl pyrrolidone polymers shown in following Table B.

**TABLE B**

| | Mn | Mw |
|---|---|---|
| Linear poly(eicosenyl N-vinyl eicosyl-pyrrolidone graft polymer | 7,000-10,000 | 40,000-60,000 |
| N-vinylpyrrolidone/vinyl acetate copolymer (60/40) | 8,000-12,000 | 40,000-60,000 |
| Polyvinylpyrrolidone/acrylic acid copolymer (50/50) | 30,000-60,000 | 100,000-300,000 |
| Crosslinked polyvinylpyrrolidone | 80,000-120,000 | 800,000-1,200,000 |
| N-vinylpyrrolidone/1-butene graft polymer | 15,000-17,000 | 40,000-60,000 |
| Linear quaternized or non-quaternized N-vinylpyrrolidone/N-vinyl caprolactam/dimethylaminoethyl methacrylate terpolymer | > 1,000,000 * | |
| Linear quaternized or non-quaternized N-vinylpyrrolidone/dimethylaminoethyl methacrylate copolymer | > 1,000,000 * | |

| | | |
|---|---|---|
| * Mn/Mw | | |

A water soluble wetting agent for pesticide and herbicide formulations also is provided herein comprising 0.01 to 90% by weight higher alkyl lactam, 0.01 to 24% anionic surfactant and water. An especially preferred embodiment utilizes a homogeneous aqueous solution containing 55% N-octyl-2-pyrrolidone, 14% sodium dodecyl sulfate, and water which can be diluted further to any concentration at less than or equal to 15% of the formulation.

In the prescribed combination, the higher alkyl lactam remains soluble, no phase separation occurring. Thus, the wetting agent is uniformly dispersed in the required formulation, providing enhanced effectiveness and wetting ability at low cost. In addition, the inventive wetting agent is totally biodegradable, avoiding aromatic components, ethylene oxide residuals or phosphates.

The wetting agent of the present invention contains one or more higher alkyl substituted lactams, an anionic surfactant and water. For purposes of this disclosure the term "higher alkyl" refers to C₆ alkyl or higher and the term "lactams" is inclusive of caprolactam, valerolactam and pyrrolidone. The lactams as shown in formula I may be used in the invention.

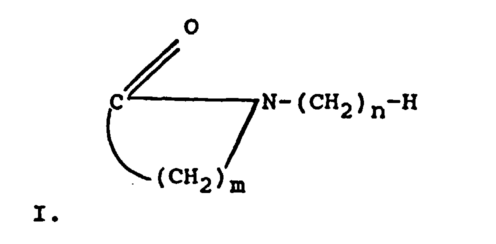

Where m = 3, 4 or 5 and n ≤ 6.

Preferably, the higher alkyl pyrrolidones of formula II are used.

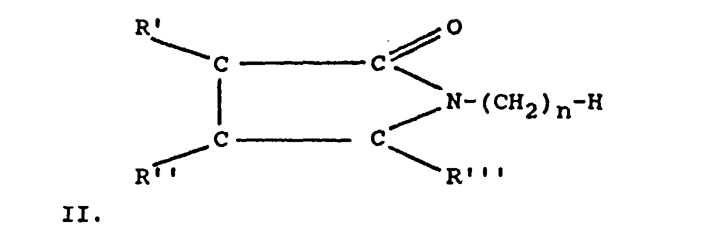

Where n = 6-20, R', R'' and R''' are H, lower alkyl, alkoxy, cycloalkyl, or aralkyl.

Most preferred are N-octyl-pyrrolidone, N-dodecylpyrrolidone or mixtures thereof.

As the anionic surfactant, alkali metal salts of C₈-C₂₂ aliphatic surfactants such as sodium dodecyl sulfate, sulfonate, alkali metal salts of alkyl aromatic sulfonates, sulfates, ethoxylated versions of the above, alkylphenyl ethoxylated phosphate esters, etc., may be used. the anionic surfactants may form pseudo salts or ion pairs with the higher-alkyl pyrrolidones, and are believed to produce synergistic effects on wetting and surface spreading.

The ranges of the various components may be 0.01 to 90% cyclic lactam, 0.01 to 24% anionic surfactant and water. Preferably, 35 to 65% cyclic lactam, 8 to 16% surfactant and water are used. More preferred is a combination of 39 to 55% higher alkyl pyrrolidone, 10 to 14% surfactant, preferably, sodium dodecyl sulfate, and water. When used as a concentrate, the concentrate can be added to a commercial formulation at the rate of 0.1% to 0.5%.

A particular advantage of the invention is that the cyclic lactams promote solubility of the active ingredients in the formulation increasing uniformity in application together with enhanced wetting. The use of such materials as wetting agents in aqueous compositions would not be expected due to the perceived propensity for phase separation. However, the inventive formulation, utilizing an anionic surfactant with the cyclic lactam, precludes this from occurring.

Various tests were conducted to confirm the efficacy of utilizing the above referenced wetting agent in a pesticide or herbicide formulation.

## Claims

1. A leach inhibiting agrichemical composition comprising an active agrichemical, an inactive carrier and a leach inhibiting amount of a copolymer of maleic acid, the corresponding C₁ to C₆ alkyl ester or mixtures thereof and a C₂ to C₂₅ comonomer of an alkyl alpha alkenyl ether or an alpha olefin; said copolymer having a Mw between about 8,000 and about 3,000,000.

2. A composition according to claim 1 further including a water based wetting agent for pesticide formulations comprising 0.01 to 90% higher alkyl lactam, 0.01 to 24% anionic surfactant and water.

3. The composition of claim 2 wherein, in the optional wetting agent, the higher alkyl substituted lactam is a pyrrolidone of the following formula: 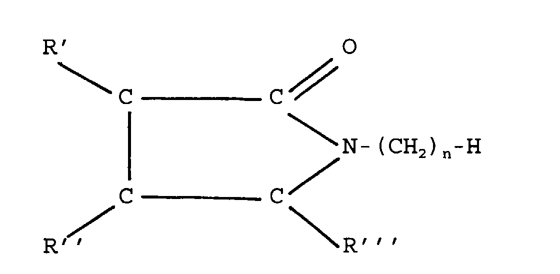 where n = 6-20 (branched or linear), R', R'' and R''' are H, lower alkyl, alkoxy, cycloalkyl, or aralkyl, including N-octyl-2-pyrrolidone, N-isooctyl pyrrolidone, N-dodecyl-2-pyrrolidone, N-octadecyl-2-pyrrolidone and mixtures thereof, and the anionic surfactant is an alkali metal salt of a C₈-C₂₂ aliphatic surfactant; or ethoxylated versions thereof.

4. The composition of claim 3 wherein the alkali metal salt is sodium dodecyl sulfate or sulfonate, alkyl aromatic sulfonate or sodium dodecyl sulfate.

5. The composition of claim 3 or claim 4 wherein from 35-65% of the higher alkyl substituted lactam, and from 8-16% of the anionic surfactant is present.

6. The composition of any one of the preceding claims wherein the copolymer contains between about 10 and about 90 wt. % of comonomer, the weight ratio of agrichemical to copolymer is between about 0.1:1 and about 10:1, and the copolymer is the copolymer of maleic acid and a comonomer which is a C₁ to C₄ alkyl vinyl ether.
